# EUROPÄISCHE PATENTSCHRIFT

(11) **EP 2 221 203 B1**
(45) Veröffentlichungstag und Bekanntmachung des Hinweises auf die Patenterteilung: **05.03.2014**
(21) Anmeldenummer: 09014937.8
(22) Anmeldetag: 02.12.2009
(51) Int. Cl.: B60J 7/12, B60J 10/10

(54) **Faltverdeck für einen Personenkraftwagen**
Collapsible roof for a passenger vehicle
Toit escamotable pour un véhicule de transport de passagers

(30) Priorität: 19.02.2009 DE 102009009722
(43) Veröffentlichungstag der Anmeldung: 25.08.2010
(73) Patentinhaber: AUDI AG, 85045 Ingolstadt (DE)
(72) Erfinder: Just, Jan, Bloomfield Hills, MI 48301 (US)
(74) Vertreter: Engelhardt, Harald

(56) Entgegenhaltungen:
- DE-C1- 4 441 667
- US-A- 5 848 819
- US-A1- 2002 084 673

## Beschreibung

Die Erfindung betrifft ein Faltverdeck für einen Personenkraftwagen nach dem Oberbegriff des Patentanspruchs 1.

Es ist ein Faltverdeck für einen Personenkraftwagen bekannt, US 5,848,819, das an seinen Längsseiten Seitenträger mit hintereinander liegenden Trägerelementen aufweist. Die Trägerelemente umfassen Halteschienen, die zur Aufnahme von Dichtkörpern für Türscheiben ausgebildet sind. An einander zugekehrten Endbereichen der Trägerelemente sind Lenkerabschnitte vorgesehen, die in einem Gelenk zusammengesetzt sind und mittels Schrauben an den Halteschienen in Lage gehalten werden.

Aus der EP 0 276 388 B1 geht eine Dichtung für ein Cabriolet-Verdeck hervor, die an Längsseiten des Verdecks von Halteschienen aufgenommen wird. Die Halteleiste ist mittels Niete an einem Gelenkteil befestigt, und die Dichtung ist mittels Stegen der Halteleiste formschlüssig festgelegt, wobei die Dichtung über einen Schlauchabschnitt mit einer Seitenscheibe zusammenarbeitet.

In der EP 0 658 455 B1 werden Trägerstrukturen zur Halterung von Dichtungen an einem Aufbau eines Kraftfahrzeugs behandelt, welche Dichtungen an Längsseiten eines Dachs verlaufen. Diese Dichtungen kooperieren mit Türscheiben bzw. Rahmen von Türscheiben von Türen des Kraftfahrzeugs.

Es ist Aufgabe der Erfindung, ein Faltverdeck für einen Personenkraftwagen zu entwerfen, dessen Verdeckgestänge sich mit vertretbarem Aufwand herstellen und zielgerichtet realisieren lässt. Dabei sollte aber auch sichergestellt sein, dass das Verdeckgestänge bei guter Festigkeit zur Gewichtsreduktion beiträgt.

Nach der Erfindung wird diese Aufgabe durch die Merkmale des Patentanspruchs 1 gelöst. Die Aufgabe wird auch durch die Merkmale des Anspruchs 12 gelöst. Weitere, die Erfindung ausgestaltende Merkmale sind in den Unteransprüchen enthalten.

Die mit der Erfindung hauptsächlich erzielten Vorteile sind darin zu sehen, dass das Verdeckgestänge, zumindest aber die Dachkappe und die vorderen Trägerelemente, eine vorbildliche, d.h. gebaute und trotzdem steife, Montageeinheit darstellt, die in Verbindung mit dem Faltverdeck hochwirksam ist. Dabei handelt es sich bei der Dachkappe und den Trägerelementen, einschließlich der Lenkerabschnitte, um Bauteile, die ohne weiteres auslegbar und realisierbar sind. Dabei bildet die Dachkappe mit dem jeweiligen vorderen Trägerelement über die Anlageabschnitte und die beabstandeten Schrauben eine Beispiel gebende Bauweise. Sinngemäß trifft dies auch für die Verbindung der Halteschiene mit dem Lenkerabschnitt zu. Die Dachkappe und die Halteschiene, weil aus einer Leichtmetalllegierung bestehend, tragen zu einer bemerkenswerten Gewichtsreduktion bei. Die Halteschiene ist multifunktional ausgebildet, denn zum einen ist mit dem C-förmigen ersten Aufnahmeabschnitt ein Stegabschnitt z.B. formschlüssig verbunden und zum anderen trägt besagte Halteschiene einen Dichtkörper mittels eines problemlos verwirklichbaren zweiten Aufnahmeabschnitts. Schließlich setzt der Zusammenbau der Dachkappe, der Halteschiene und der Lenkerabschnitte über die konstruktive Gestaltung der Vorrichtung besondere Maßstäbe in der Verdecktechnologie.

In der Zeichnung wird ein Ausführungsbeispiel der Erfindung gezeigt, das nachstehend näher beschrieben wird.

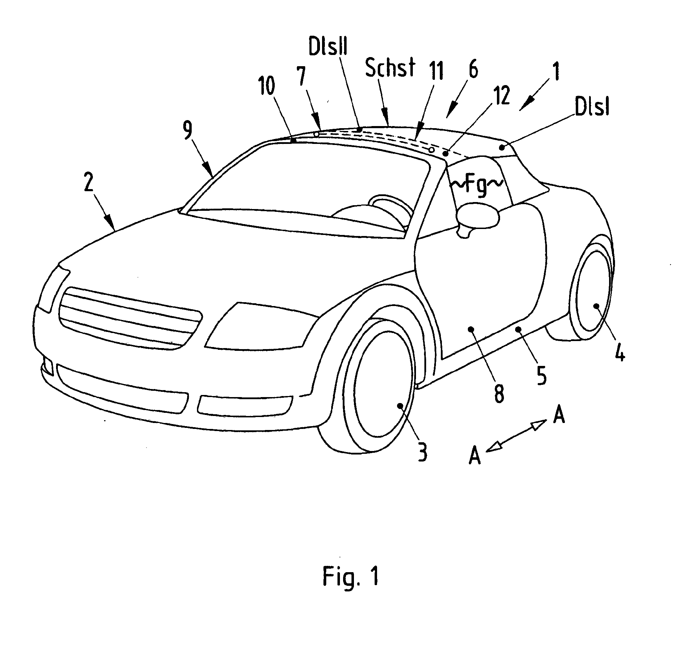

Es zeigen
Fig. 1 eine Schrägansicht von vorne links oben auf einen Personenkraftwagen mit einem ein Verdeckgestänge aufweisenden Faltverdeck,
Fig. 2 eine Teilseitenansicht auf das Verdeckgestänge des Faltverdecks gemäß Fig. 2 in größerem Maßstab,
Fig. 3 eine erste schematische Explosionsschrägansicht von hinten links oben auf einen vorderen Bereich des Verdeckgestänges gemäß Fig. 1 mit einer Dachkappe, einem vorderen Trägerelement und einem ersten Lenkerabschnitt,

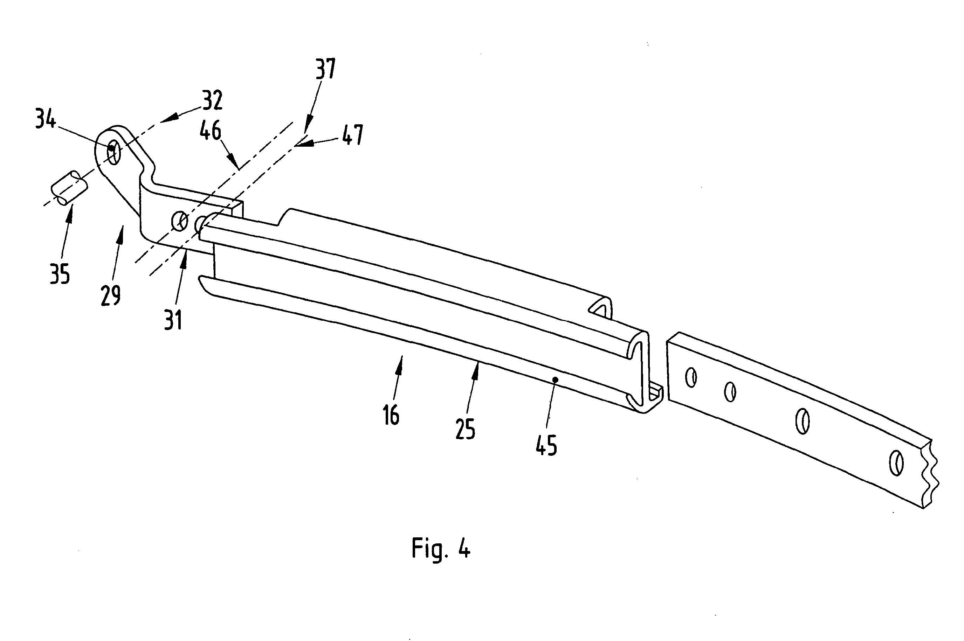

Fig. 4 eine zweite schematische Explosionsschrägansicht von hinten links oben auf einen mittleren Bereich des Verdeckgestänges gemäß Fig. 1 mit einem mittleren Trägerelement und einem zweiten sowie einem dritten Lenkerabschnitt,

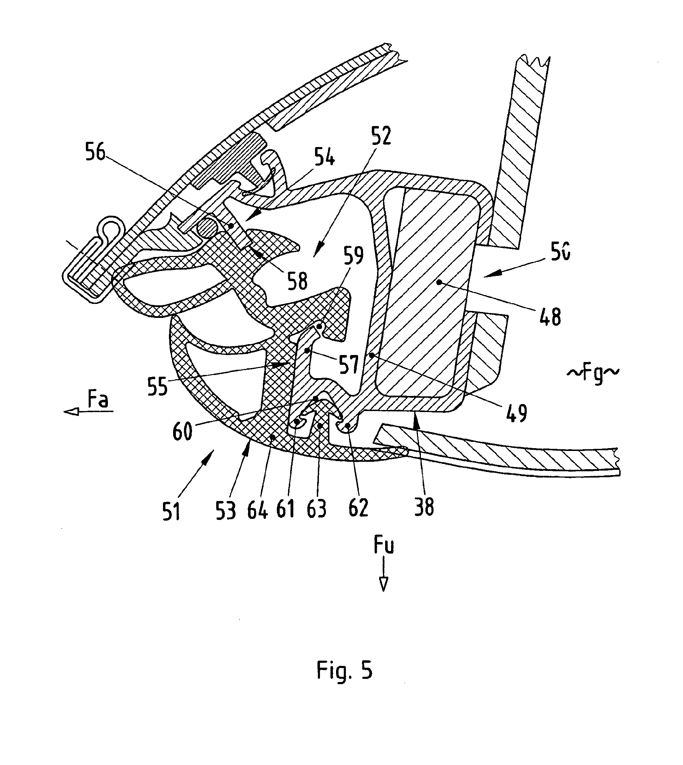

Fig. 5 einen Schnitt nach der Linie V-V der Fig. 2 in größerem Maßstab.

Ein Personenkraftwagen 1 umfasst einen Aufbau 2, der von Rädern 3 und 4 getragen wird und einen Grundkörper 5 und ein bewegliches von einer Schließstellung Schst in eine Offenstellung -nicht gezeigt- verstellbares Dach 6 umfasst, das als Faltverdeck 7 ausgebildet ist. Am Grundkörper 5 gehalten sind Seitentüren 8 und ein Windschutzscheibenrahmen 9, der einen oberen Querträger 10 besitzt. Mit dem Querträger 10 verbunden ist ein vorderer Bereich 11, z.B. eine Dachkappe 12, des einen Fahrgastraum Fg in der Schließstellung Schst überspannenden Faltverdecks 7.

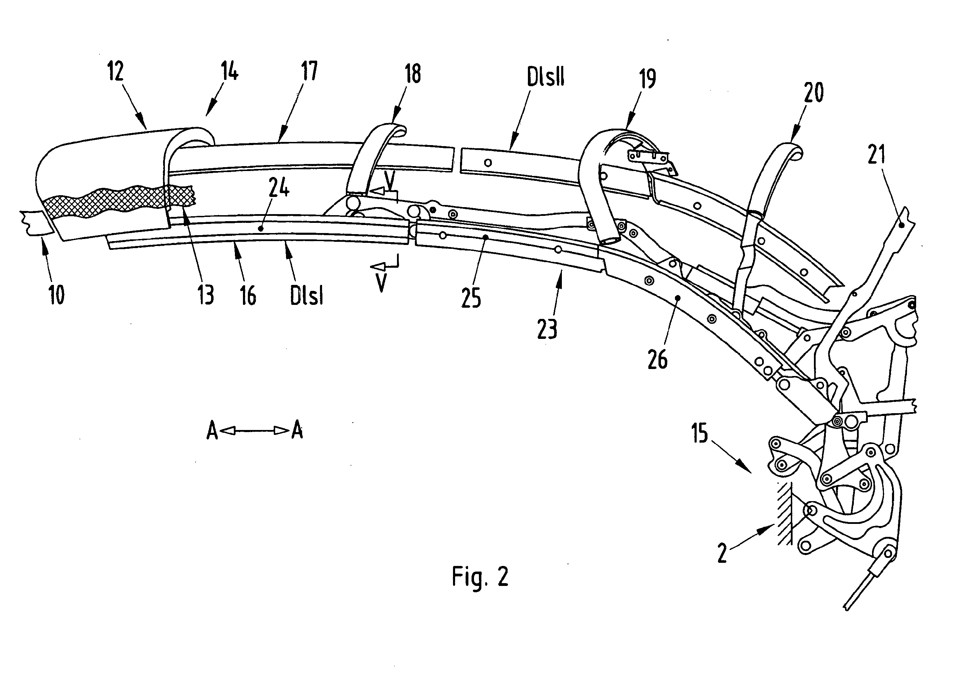

Das Faltverdeck 7 umfasst einen Verdeckstoff 13 und ein diesen tragendes Verdeckgestänge 14, das am Aufbau 2 in einem rückwärtigen Bereich 15 des Fallverdecks 7 angelenkt ist -Fig. 2-. Das Verdeckgestänge 14 weist an Dachlängsseiten DIs Seitenträger 16 und 17 auf, zwischen denen sich mehrere quer zur Fahrzeuglängsrichtung A-A verlaufende Spriegel 18, 19, 20 und 21 erstrecken, und die etwa vom Querträger 10 des Windschutzscheibenrahmens 9 bis zum rückwärtigen Bereich 15 auf Höhe einer Gürtellinie 22, und zwar in einem Bogen 23, verlaufen. Jeder Dachseitenträger 16 setzt sich aus mehreren hintereinander liegenden Trägerelementen zusammen, nämlich einem vorderen Trägerelement 24, einem mittleren Trägerelement 25 und einem hinteren Trägerelement 26.

Das vordere Trägerelement 24 wirkt mit der Dachkappe 12 unter Vermittlung einer ersten Verschraubung 27 zusammen. Und an einander zukehrten ersten und zweiten Endbereichen 28 und 29 des vorderen Trägerelements 24 und des mittleren Trägerelements 25 sind erste und zweite Lenkerabschnitte 30 und 31 angebracht, die über ein Gelenk 32, umfassend Lagebohrungen 33 und 34, und einen Gelenkzapfen 35, miteinander gekoppelt sind. Der erste Lenkerabschnitt 30 wird unter Vermittlung einer zweiten Verschraubung 36 an dem vorderen Trägerelement 24 gehalten; der zweite Lenkerabschnitt 31 unter Vermittlung einer dritten Verschraubung 37.

Die Trägerelemente 24, 25 und 26 sind jeweils nach Art von Halteschienen ausgeführt, wobei eine erste Halteschiene 38 des vorderen Trägerelements 25 mit einem ersten Anlageabschnitt 39 an einen zweiten Anlageabschnitt 40 der Dachkappe 12 angeschlossen ist. Im Bereich der Anlageabschnitte 39 und 40 ist die erste Verschraubung 28 wirksam, die zwei in Fahrzeuglängsrichtung A-A mit Abstand zueinander angeordnete Schrauben 41 und 42 aufweist. Die zweite und dritte Verschraubung 36 und 37 sind vergleichbar gestaltet. So weist die zweite Verschraubung 36 zwischen erstem Lenkerabschnitt 30 und erster Halteschiene 38 Schrauben 43 und 44 auf; die dritte Verschraubung 37 zwischen einer zweiten Halteschiene 45 und dem zweiten Lenkerabschnitt 31 die Schrauben 46 und 47.

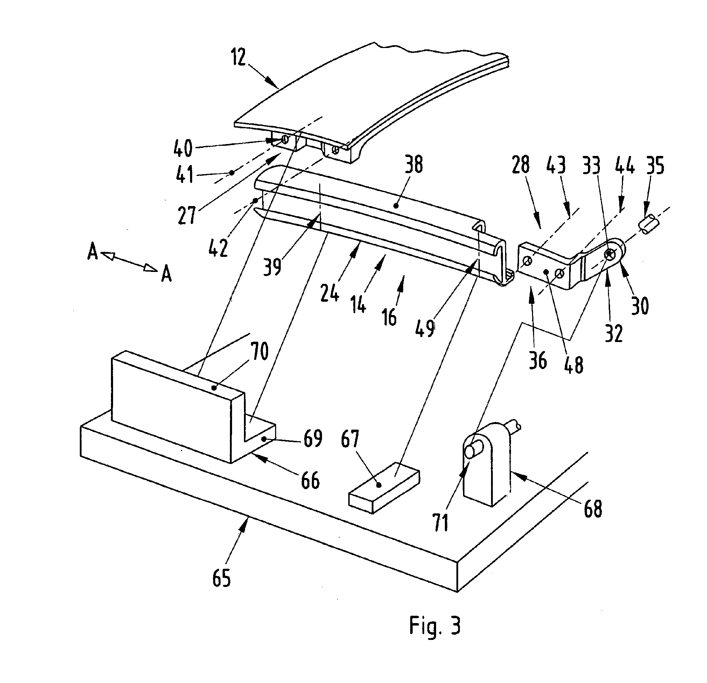

Der erste Lenkerabschnitt 30 -Fig. 3- ist ein flächiges Bauteil mit einem rechteckigen aufrecht stehenden Querschnitt, welcher Lenkerabschnitt 30 mit einem ersten aufrechten Stegabschnitt 48 an einem zweiten aufrechten Stegabschnitt 49 der ersten Halteschiene 38 herangeführt ist, und die Schrauben 43 und 44 der zweiten Verschraubung 36 durchdringen den ersten und den zweiten Stegabschnitt 48 und 49. Der zweite aufrechte Stegabschnitt 49 der ersten Halteschiene 38 ist Teil eines etwa C-förmigen ersten dem Fahrgastraum Fg zugekehrten Aufnahmeabschnitts 50, in den der erste Stegabschnitt 48 eingeführt ist, dergestalt, dass der erste Stegabschnitt 48 formschlüssig im C-förmigen Aufnahmeabschnitt 50 gehalten wird.

Die Dachkappe 12 ist ein flächiges Einzelteil, das sich über eine Teillänge des Faltverdecks 7 in Fahrzeuglängsrichtung A-A erstreckt und nach Art eines Flächenspriegels ausgebildet ist. Damit die Dachkappe 12 und zumindest die erste Halteschiene 38 zur Gewichtsreduktion beitragen, bestehen sie aus einer Leichtmetalllegierung -AL oder Mg-, und aus Festigkeitsgründen ist der erste Lenkerabschnitt 30 -auch der Lenkerabschnitt 31- aus einer eisenmetallischen Legierung hergestellt.

Die erste Halteschiene 38 ist auf einem der Fahrzeugaußenseite Fa zugekehrten Bereich 51 mit einem zweiten Aufnahmeabschnitt 52 für einen Dichtkörper 53 versehen. Der zweite Aufnahmeabschnitt 52 besitzt an gegenüberliegenden Seiten 54 und 55 Stege 56 und 57, die in korrespondierende U-förmige Ausnehmungen 58 und 59 des Dichtkörpers 53 eingreifen und dabei letzteren festlegen. In einen der Fahrzeugunterseite Fu zugekehrten Bereich 58 der Halteleiste 53 ist eine V-förmige Ausnehmung 60 eingearbeitet, die an gegenüberliegenden Abschnitten mit Widerhaken 61 und 62 versehen ist. In der Ausnehmung 60 ruht eine Erweiterung 63 eines Dichtkörperabschnitts 64, der die Widerhaken 61 und 62 hintergreift, so dass der Dichtkörperabschnitt 64 festgelegt ist.

Die erste Halteschiene 38 mit dem ersten Aufnahmeabschnitt 50 und dem zweiten Aufnahmeabschnitt 52 sind aus einem Stück hergestellt, und zwar durch Strangpressen oder ein vergleichbares vorteilhaftes Fertigungsverfahren.

Für den Zusammenbau von Teilen des Verdeckgestänges 14 des Faltverdecks 7 wie z.B. Dachkappe 12, Halteschienen 38 und ersten Lenkerabschnitt 31 dient eine Vorrichtung 65 -Fig. 3-, die ein erstes Anschlagelement 66 und ein zweites Anschlagelement 67 für die Halteschiene 38 aufweist. Und die Vorrichtung 65 ist mit einem Fixierungselement 68 für den Lenkerabschnitt 31 ausgestattet. Das erste Anschlagelement 66 ist im Querschnitt winkelförmig mit Schenkeln 69 und 70 ausgebildet, an denen die Halteschiene 38, gegebenenfalls auch die Dachkappe 12, zur Anlage gebracht wird. Das Fixierungselement 68 ist mit einem Fixierungszapfen 71 versehen, der eine Lagerbohrung 33 des Gelenks 32 des Lenkerabschnitts 30 ausrichtet.

## Patentansprüche

1. Faltverdeck (7) für einen Personenkraftwagen (1), das zwischen einer Schließstellung und einer Offenstellung bewegbar ist und das einen einen Fahrgastraum (Fg) in der Schließstellung überspannenden Verdeckstoff (13) und ein an einem Aufbau (2) des Personenkraftwagens (1) angelenktes Verdeckgestänge aufweist, welches Verdeckgestänge (14) an Dachlängsseiten (Dls) verlaufende Seitenträger (16, 17) umfasst, wobei die Seitenträger (16, 17) mehrere hintereinander liegende und miteinander gekoppelte zumindest vordere und mittlere Trägerelemente (24, 25) aufweisen, wobei benachbart von einander zugekehrten ersten und zweiten Endbereichen (28 und 29) des jeweiligen vorderen und mittleren Trägerelements (24 und 25) erste und zweite an einem Gelenk (32) zusammengesetzte Lenkerabschnitte (30 und 31) der vorderen und mittleren Trägerelemente (25 und 25) mittels einer zweiten Verschraubung (36) und einer dritten Verschraubung (37) gehalten sind, **dadurch gekennzeichnet, dass** die vorderen Trägerelemente (24) mit einer quer zur Fahrzeuglängsrichtung (A-A) verlaufenden, an einen Windschutzscheibenrahmen (9) angrenzenden Dachkappe (12) versehen sind, die mit den vorderen Trägerelementen (24) unter Vermittlung einer ersten Verschraubung (27) zusammenwirkt, und dass zumindest das vordere Trägerelement (24) eine Art Halteschiene (38) darstellt, die mit einem ersten Anlageabschnitt (39) an einen zweiten Anlageabschnitt (40) der Dachkappe (12) herangeführt ist, wobei im Bereich der ersten und zweiten Anlageabschnitte (39 und 40) die erste Verschraubung (27) vorgesehen ist.

2. Faltverdeck nach Anspruch 1, **dadurch gekennzeichnet, dass** die erste Verschraubung (27) zwischen Halteschiene (38) und Dachkappe (12) zwei in Fahrzeuglängsrichtung (A-A) beabstandete erste Schrauben (41 und 42) umfasst.

3. Faltverdeck nach Anspruch 1 oder 2, **dadurch gekennzeichnet, dass** der erste Lenkerabschnitt (30) am ersten Endbereich (28) mittels der zweiten in Fahrzeuglängsrichtung (A-A) beabstandete Schrauben (43 und 44) aufweisenden Verschraubung (36) mit der Halteschiene (38) verbunden ist.

4. Faltverdeck nach Anspruch 3, **dadurch gekennzeichnet, dass** der erste Lenkerabschnitt (30) mit einem ersten aufrechten Stegabschnitt (48) an einem zweiten aufrechten Stegabschnitt (59) der Halteschiene (38) anliegt und die Schrauben (43 und 44) der zweiten Verschraubung (36) sowohl den ersten Stegabschnitt (48) wie auch den zweiten Stegabschnitt (49) durchdringen.

5. Faltverdeck nach Anspruch 4, **dadurch gekennzeichnet, dass** der erste aufrechte Stegabschnitt (48) in einen etwa C-förmigen ersten Aufnahmeabschnitt (50) der Halteschiene (38) eingeführt ist, der an einer dem Fahrgastraum (Fg) des Personenwagens (1) zugewandten Seite der Haltschiene (38) vorgesehen ist.

6. Faltverdeck nach einem der Ansprüche 1 bis 5, **dadurch gekennzeichnet, dass** die Dachkappe (12) und die Halteschiene (38) aus einer Leichtmetalllegierung und der erste Lenkerabschnitt (30) aus einer Stahllegierung bestehen.

7. Faltverdeck nach Anspruch 5, **dadurch gekennzeichnet, dass** die Halteschiene (38) in einem der Fahrzeugaußenseite (Fa) zugekehrten Bereich einen zweiten Aufnahmeabschnitt (52) für einen Dichtkörper (53) aufweist.

8. Faltverdeck nach Anspruch 7, **dadurch gekennzeichnet, dass** der zweite Aufnahmeabschnitt (53) der Halteschiene (38) erste und zweite Stege (56 und 57) besitzt, die in korrespondierende Ausnehmungen (58 und 59) des Dichtkörpers (53) und dabei letzteren festlegend eingreifen.

9. Faltverdeck nach Anspruch 7 oder 8, **dadurch gekennzeichnet, dass** der zweite Aufnahmeabschnitt (52) in einem der Fahrzeugunterseite (Fu) zugewandten Bereich eine V-förmige, mit Widerhaken (61 und 62) versehene Ausnehmung (60) aufweist, in der eine korrespondierende, die Widerhaken hintergreifende Erweiterung (63) eines Dichtkörperabschnitts (64) fixiert ist.

10. Faltverdeck nach einem der Ansprüche 5 oder 7, **dadurch gekennzeichnet, dass** die Halteschiene (38) mit dem ersten Aufnahmeabschnitt (50) und dem zweiten Aufnahmeabschnitt (52) aus einem Stück hergestellt ist.

11. Faltverdeck nach Anspruch einem der Ansprüche 1 bis 10, **dadurch gekennzeichnet, dass** die Halteschiene (38) durch Strangpressen hergestellt ist.

12. Verfahren zum Zusammenbau des Faltverdecks nach einem oder mehreren der vorangehenden Ansprüche, **dadurch gekennzeichnet, dass** der Zusammenbau in einer Vorrichtung (65) erfolgt, die wenigstens ein erstes Anschlagelement (66) und ein zweites Anschlagelement (67) für die Halteschiene (38) und ein Fixierungselement (68) für den ersten Lenkerabschnitt (30) aufweist.

13. Verfahren zum Zusammenbau des Faltverdecks nach Anspruch 12, **dadurch gekennzeichnet, dass** das erste Anschlagelement (66) im Querschnitt winkelförmig ausgebildet ist, an dessen Schenkeln (69 und 70) die Halteschiene (38), gegebenenfalls auch die Dachkappe (12), zur Anlage gelangt.

14. Verfahren zum Zusammenbau des Faltverdecks nach Anspruch 12 oder 13, **dadurch gekennzeichnet, dass** das Fixierungselement (68) einen Fixierungszapfen (71) aufweist, der eine Lagerbohrung (33) des Gelenks (32) im ersten Lenkerabschnitt (30) ausrichtet.

## Claims

1. Folding top (7) for a passenger vehicle (1), which is movable between a closed position and an open position and which has a top fabric (13) which covers a passenger compartment (Fg) in the closed position and a top linkage which is articulated to a body (2) of the passenger vehicle (1), which top linkage (14) comprises lateral supports (16, 17) extending on roof longitudinal sides (Dls), the lateral supports (16, 17) having a plurality of at least front and central support elements (24, 25) which are located one behind the other and are coupled to one another, first and second link portions (30 and 31), assembled on an articulation (32), of the front and central support elements (24 and 25) being held, by means of a second screw connection (36) and a third screw connection (37), adjacent to first and second end portions (28 and 29) of each front and central support element (24 and 25), which end portions face each other, **characterised in that** the front support elements (24) are provided with a header bow (12) which extends transverse to the vehicle longitudinal direction (A-A), adjoins a windscreen frame (9) and interacts with the front support elements (24) by means of a first screw connection (27), and **in that** at least the front support element (24) is a type of holding rail (38) which is brought via a first contact portion (39) close to a second contact portion (40) of the header bow (12), the first screw connection (27) being provided in the region of the first and second contact portions (39 and 40).

2. Folding top according to claim 1, **characterised in that** the first screw connection (27) comprises two first screws (41 and 42) spaced apart in the vehicle longitudinal direction (A-A) between the holding rail (38) and the header bow (12).

3. Folding top according to either claim 1 or claim 2, **characterised in that** the first link portion (30) is connected to the holding rail (38) at the first end region (28) by means of the second screw connection (36), which has screws (43 and 44) spaced apart in the vehicle longitudinal direction (A-A).

4. Folding top according to claim 3, **characterised in that** the first link portion (30) rests, via a first vertical web portion (48), on a second vertical web portion (59) of the holding rail (38), and the screws (43 and 44) of the second screw connection (36) penetrate both the first web portion (48) and the second web portion (49).

5. Folding top according to claim 4, **characterised in that** the first vertical web portion (48) is inserted into an approximately C-shaped first receiving portion (50) of the holding rail (38), which receiving portion is provided on a side of the holding rail (38) facing the passenger compartment (Fg) of the passenger vehicle (1).

6. Folding top according to any of claims 1 to 5, **characterised in that** the header bow (12) and the holding rail (38) consist of a light metal alloy and the first link portion (30) consists of a steel alloy.

7. Folding top according to claim 5, **characterised in that** the holding rail (38) has in a region facing the vehicle exterior (Fa) a second receiving portion (52) for a sealing body (53).

8. Folding top according to claim 7, **characterised in that** the second receiving portion (53) of the holding rail (38) has first and second webs (56 and 57) which engage in corresponding recesses (58 and 59) of the sealing body (53), thereby fixing said sealing body.

9. Folding top according to either claim 7 or claim 8, **characterised in that** the second receiving portion (52) has in a region facing the vehicle underside (Fu) a V-shaped recess (60) which is provided with barbs (61 and 62) and in which a corresponding extension (63) of the sealing body portion (64) is fixed, which extension engages behind the barbs.

10. Folding top according to either claim 5 or claim 7, **characterised in that** the holding rail (38) is produced from one piece with the first receiving portion (50) and the second receiving portion (52).

11. Folding top according to any of claims 1 to 10, **characterised in that** the holding rail (38) is produced by extrusion.

12. Method for assembling the folding top according to one or more of the preceding claims, **characterised in that** the assembly takes place in a device (65) which has at least a first stop element (66) and a second stop element (67) for the holding rail (38) and a fixing element (68) for the first link portion (30).

13. Method for assembling the folding cover according to claim 12, **characterised in that** the first stop element (66) is formed with an angular cross section, the holding rail (38), and where appropriate the header bow (12), coming into contact with the arms (69 and 70) of said stop element.

14. Method for assembling the folding top according to either claim 12 or claim 13, **characterised in that** the fixing element (68) has a fixing pin (71) which orients a bearing hole (33) of the articulation (32) in the first link portion (30).

## Revendications

1. Capote pliante (7) pour une voiture particulière (1), laquelle capote pliante peut être déplacée entre une position fermée et une position ouverte et comporte une partie couvrante (13) tendue au-dessus d'un habitacle (Fg) en position fermée et une tringlerie de toit articulée sur une structure (2) de la voiture particulière (1), laquelle tringlerie de toit (14) comprend des supports latéraux (16, 17) qui s'étendent sur les côtés longitudinaux de toit (Dls), les supports latéraux (16, 17) comportant plusieurs éléments porteurs (24, 25), au moins avant et centraux, situés les uns derrière les autres et couplés entre eux et des premiers et deuxièmes tronçons de barres de liaison (30 et 31), assemblés avec une articulation (32), des éléments porteurs avant et centraux (24 et 25) étant maintenus au moyen d'un deuxième assemblage vissé (36) et d'un troisième assemblage vissé (37) au voisinage de premières et deuxièmes extrémités (28 et 29), tournées l'une vers l'autre, de l'élément porteur avant et central respectif (24 et 25), **caractérisée en ce que** les éléments porteurs avant (24) sont munis d'une voûte de toit (12) qui s'étend transversalement par rapport au sens (A-A) de la longueur du véhicule, qui est adjacente à un cadre de pare-brise (9) et qui coopère avec les éléments porteurs avant (24) par l'intermédiaire d'un premier assemblage vissé (27) et **en ce qu'**au moins l'élément porteur avant (24) représente une sorte de barre de maintien (38) qui s'approche avec un premier tronçon d'appui (39) d'un deuxième tronçon d'appui (40) de la voûte de toit (12), le premier assemblage vissé (27) étant prévu dans la zone du premier et du deuxième tronçon d'appui (39 et 40).

2. Capote pliante selon la revendication 1, **caractérisée en ce que** le premier assemblage vissé (27) entre la barre de maintien (38) et la voûte de toit (12) comprend deux premières vis (41 et 42) distantes l'une de l'autre dans le sens (A-A) de la longueur du véhicule.

3. Capote pliante selon la revendication 1 ou 2, **caractérisée en ce que** le premier tronçon de barre de liaison (30) est assemblé par la première extrémité (28), au moyen du deuxième assemblage vissé (36) comportant des vis (43 et 44) distantes l'une de l'autre dans le sens (A-A) de la longueur du véhicule, à la barre de maintien (38).

4. Capote pliante selon la revendication 3, **caractérisée en ce que** le premier tronçon de barre de liaison (30) s'appuie avec un premier tronçon de traverse dressé (48) contre un deuxième tronçon de traverse dressé (59) de la barre de maintien (38) et **en ce que** les vis (43 et 44) du deuxième assemblage vissé (36) traversent aussi bien le premier tronçon de traverse (48) que le deuxième tronçon de traverse (49).

5. Capote pliante selon la revendication 4, **caractérisée en ce que** le premier tronçon de traverse dressé (48) est introduit dans un premier tronçon de logement (50), sensiblement en forme de C, de la barre de maintien (38), lequel premier tronçon de logement est prévu sur un côté, proche de l'habitacle (Fg) de la voiture particulière (1), de la barre de maintien (38).

6. Capote pliante selon l'une des revendications 1 à 5, **caractérisée en ce que** la voûte de toit (12) et la barre de maintien (38) sont en un alliage métallique léger et **en ce que** le premier tronçon de barre de liaison (30) est en acier.

7. Capote pliante selon la revendication 5, **caractérisée en ce que** la barre de maintien (38) comporte, dans une zone tournée vers le côté extérieur de véhicule (Fa), un deuxième tronçon de logement (52) pour un élément d'étanchéité (53).

8. Capote pliante selon la revendication 7, **caractérisée en ce que** le deuxième tronçon de logement (53) de la barre de maintien (38) comporte une première et une deuxième traverse (56 et 57) qui pénètrent dans des évidements correspondants (58 et 59) de l'élément d'étanchéité (53) et qui fixent ainsi ce dernier.

9. Capote pliante selon la revendication 7 ou 8, **caractérisée en ce que** le deuxième tronçon de logement (52) comporte dans une zone proche du côté inférieur de véhicule (Fu) un évidement (60) en forme de V qui est muni de crochets (61 et 62) et dans lequel pénètre un élargissement correspondant (63), qui prend les crochets par l'arrière, d'un tronçon d'élément d'étanchéité (64).

10. Capote pliante selon l'une des revendications 5 ou 7, **caractérisée en ce que** la barre de maintien (38) est fabriquée d'une seule pièce avec le premier tronçon de logement (50) et avec le deuxième tronçon de logement (52).

11. Capote pliante selon l'une des revendications 1 à 10, **caractérisée en ce que** la barre de maintien (38) est fabriquée par moulage par extrusion.

12. Procédé d'assemblage de la capote pliante selon une ou plusieurs des revendications précédentes, **caractérisé en ce que** l'assemblage s'effectue dans un dispositif (65) qui comporte au moins un premier élément de butée (66) et un deuxième élément de butée (67) pour la barre de maintien (38) ainsi qu'un élément de fixation (68) pour le premier tronçon de barre de liaison (30).

13. Procédé d'assemblage de la capote pliante selon la revendication 12, **caractérisé en ce que** le premier élément de butée (66) est conçu avec une section transversale qui est en forme d'angle et sur les branches (69 et 70) de laquelle vient s'appuyer la barre de maintien (38), et éventuellement la voûte de toit (12).

14. Procédé d'assemblage de la capote pliante selon la revendication 12 ou 13, **caractérisé en ce que** l'élément de fixation (68) comporte un pivot de fixation (71) qui oriente un trou de palier (33) de l'articulation (32) dans le premier tronçon de barre de liaison (30).
